(19) Europäisches Patentamt
European Patent Office
Office européen des brevets

(11) **EP 3 152 844 B1**

(12) **EUROPEAN PATENT SPECIFICATION**

(45) Date of publication and mention
of the grant of the patent:
**13.11.2019 Bulletin 2019/46**

(51) Int Cl.:
**H04B 7/04** (2017.01)     **H04B 7/06** (2006.01)
**H04B 7/08** (2006.01)

(21) Application number: **15733534.0**

(22) Date of filing: **28.05.2015**

(86) International application number:
**PCT/IB2015/053990**

(87) International publication number:
**WO 2015/186026 (10.12.2015 Gazette 2015/49)**

(54) **EFFICIENT UPLINK TRANSMISSION OF CHANNEL STATE INFORMATION**

EFFIZIENTE ÜBERTRAGUNG DER KANALZUSTANDSINFORMATIONEN IN DER
UPLINK-VERBINDUNG

TRANSMISSION EFFICACE EN LIAISON MONTANTE D'INFORMATIONS D'ÉTAT DU CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2014 US 201414296273**

(43) Date of publication of application:
**12.04.2017 Bulletin 2017/15**

(73) Proprietor: **Telefonaktiebolaget LM Ericsson
(publ)**
**164 83 Stockholm (SE)**

(72) Inventors:
• **HUI, Dennis**
**Sunnyvale, California 94087 (US)**

• **CHENG, Jung-Fu**
**Fremont, California 94539 (US)**
• **ZANGI, Kambiz**
**Chapel Hill, North Carolina 27514 (US)**
• **KRASNY, Leonid**
**Cary, North Carolina 27518 (US)**

(74) Representative: **Ericsson
Patent Development
Torshamnsgatan 21-23
164 80 Stockholm (SE)**

(56) References cited:
**US-A1- 2008 187 061     US-A1- 2009 124 290
US-A1- 2011 077 020     US-A1- 2011 280 287
US-A1- 2013 077 658**

**Description**

CROSS-REFERENCE TO RELATED APPLICATIONS

This application is a Continuation-in-Part of U.S. Patent Application No. 13/439,759 filed April 4, 2012, which is a Continuation of U.S. Patent Application No. 12/555,966 filed September 9, 2009, which claims the benefit of U.S. Provisional Patent Application No. 61/172,484, filed April 24, 2009.

TECHNICAL FIELD

The present invention relates generally to wireless communication systems, and in particular, the present invention relates to an efficient system and method of providing channel state information from user equipment to a wireless communication network.

BACKGROUND

Wireless communication networks transmit communication signals in the downlink over radio frequency channels from fixed transceivers, known as base stations, to mobile user equipment (UE) within a geographic area, or cell. The UE transmit signals in the uplink to one or more base stations. In both cases, the received signal may be characterized as the transmitted signal, altered by channel effects, plus noise and interference. To recover the transmitted signal from a received signal, a receiver thus requires both an estimate of the channel, and an estimate of the noise/interference. The characterization of a channel is known as channel state information (CSI). One known way to estimate a channel is to periodically transmit known reference symbols, also known as pilot symbols. Since the reference symbols are known by the receiver, any deviation in the received symbols from the reference symbols (once estimated noise/interference is removed) is caused by channel effects. An accurate estimate of CSI allows a receiver to more accurately recover transmitted signals from received signals. In addition, by transmitting CSI from the receiver to a transmitter, the transmitter may select the transmission characteristics - such as coding, modulation, and the like - best suited for the current channel state. This is known as channel-dependent link adaptation.

Modern wireless communication networks are interference limited. The networks typically process transmissions directed to each UE in a cell independently. Transmissions to other UEs in the same cell are regarded as interference at a given UE - giving rise to the term inter-cell interference. One approach to mitigating inter-cell interference is Coordinated Multipoint (CoMP) transmission. CoMP systems employ numerous techniques to mitigate inter-cell interference, including MIMO channels, numerous distributed antennas, beamforming, and Joint Processing.

Joint Processing (JP) is a CoMP transmission technique currently being studied for Long Term Evolution (LTE) Advanced. In JP, transmissions to multiple UEs are considered jointly, and a global optimization algorithm is applied to minimize inter-cell interference. That is, JP algorithms attempt to direct transmission energy toward targeted UEs, while avoiding the generation of interference at other UEs. To operate effectively, JP systems require information about the transmission channels. There are two ways in which the channel information, or CSI, is fed back to system transmitters: Precoding Matrix Indicator (PMI) and quantized channel feedback.

PMI feedback, specified in LTE Release 8, is essentially a recommendation of a transmission format by each UE. A plurality of predefined precoding matrices are designed offline and known at both the base station and UE. The precoding matrices define various sets of downlink coding and transmission parameters. Each UE measures its channel, and searches through the precoding matrices, selecting one that optimizes some quantifiable metric. The selected precoding matrix is fed back or reported to the base station. The base station then considers all recommended precoding matrices, and selects the precoding and transmission parameters that implement a globally optimal solution over the cell. In the scenarios contemplated when Release-8 LTE was designed, PMI feedback works well, due to a high correlation between recommendations from UEs and the actual desirable transmission parameters. PMI feedback compression reduces uplink bandwidth by exploiting the fact that only part of the channel - the "strong directions," i.e., the signal space - needs to be fed back to the transmitter.

In JP CoMP applications, it is unlikely that the desired transmission format (which achieves interference suppression) will coincide with a transmission format recommended by a UE. No recommending UE has any knowledge about other UEs that will be interfered by the transmission to the recommending UE. Additionally, the recommending UE has no knowledge of transmissions scheduled to other UEs that will interfere with its signals. Also, PMI feedback compression reduces bandwidth by reporting only the part of the channel of interest to transmissions directed to the recommending UE. While this increases uplink efficiency for non-cooperative transmission, it is disadvantageous for cooperative transmission, as it denies the network information about the channel that may be useful in the JP optimization.

In quantized channel feedback, UEs attempt to describe the actual channel. In contrast to PMI feedback, this entails feeding back information about not only the signal space but also the complementary space (the "weaker space," also somewhat inaccurately referred to as the "null space") of the channel. Feedback of the whole channel results in several advantages. With full CSI available at the network, coherent JP schemes can suppress interference. Additionally, the network can obtain individualized channel feedback by transmitting unique reference symbols to each UE. This enables flexible and future-proof implementations of a variety of JP transmission methods, since the methods are essentially transparent to the UE.

Even without JP CoMP transmission, CSI at the network can solve one of the most fundamental problems plaguing current wireless system - the inaccuracy in channel-dependent link adaptation due to the network not being able to predict the interference experienced by the UEs (a problem closely related to the well-known flash-light effect). Once the network knows the CSI of bases near each UE, the network can accurately predict the SINR at each UE resulting in significantly more accurate link adaptation.

Even though the advantages of direct CSI over PMI feedback are clear, the major issue with direct CSI feedback is bandwidth. Full CSI feedback requires a high bitrate to transmit the CSI from each UE to the network. Time-frequency uplink channel resources must be used to carry the CSI feedback on the uplink channel, making these resources unavailable for transmitting user data on the uplink - the CSI feedback transmissions are thus pure overhead, directly reducing the efficiency of uplink data transmissions. Conveying direct CSI feedback to the network without consuming excessive uplink resources stands as a major challenge of modern communication system design.

The patent applications US 2009/124290 A1, US 2011/280287 A1, US 2011/077020 A1, US 2008/187061 A1 and US 2013/077658 A1 disclose methods of reporting Channel State Information, CSI, by a multi antenna User Equipment, comprising at each iteration, selecting either a subset of antennas or a subset of sub carriers for transmitting CSI.

SUMMARY

The application relates to a method according to claim 1 and to a UE according to claim 6.

While several embodiments and/or examples are disclosed in this description, the subject matter for which protection is sought is strictly and solely limited to those embodiments and/ or examples encompassed by the scope of the appended claims. Embodiments and/or examples mentioned in the description that do not fall under the scope of the claims are useful for understanding the invention.

BRIEF DESCRIPTION OF THE DRAWINGS

Figure 1 is a functional block diagram of a wireless communication network.
Figure 2A is a time-frequency plot showing reference symbol transmission from a single antenna port.
Figure 2B is a time-frequency plot showing reference symbol transmission from two antenna ports.
Figure 2C is a time-frequency plot showing reference symbol transmission from three antenna ports.
Figure 3 is a flow diagram of a first exemplary embodiment of a method of reporting CSI feedback by a UE.
Figure 4A is a graph of the in-phase component of a representative channel response, depicting the quantized channel estimates reported to the network.
Figure 4B is a graph of the quadrature component of a representative channel response, depicting the quantized channel estimates reported to the network.
Figure 5 is a flow diagram of a second exemplary embodiment of a method of reporting CSI feedback by the UE.
Figure 6 is a simplified block diagram of an exemplary embodiment of a UE modified in accordance with the present disclosure.
Figure 7 is a flow diagram of a third exemplary embodiment of a method of reporting CSI feedback by the UE.

DETAILED DESCRIPTION

For the purpose of clear disclosure and full enablement, the present invention is described herein as embodied in a wireless communication network based on Orthogonal Frequency Division Multiplex (OFDM) modulation. More specifically, embodiments herein are based on the Evolved Universal Terrestrial Radio Access (E-UTRA) system, which is also commonly referred to as the Long-Term Evolution (LTE) of the widely deployed WCDMA systems. Those of skill in the art will readily appreciate that these systems are representative only and not limiting, and will be able to apply the principles and techniques of the present invention to a wide variety of wireless communication systems, based different access and modulation methods, given the teachings of the present disclosure.

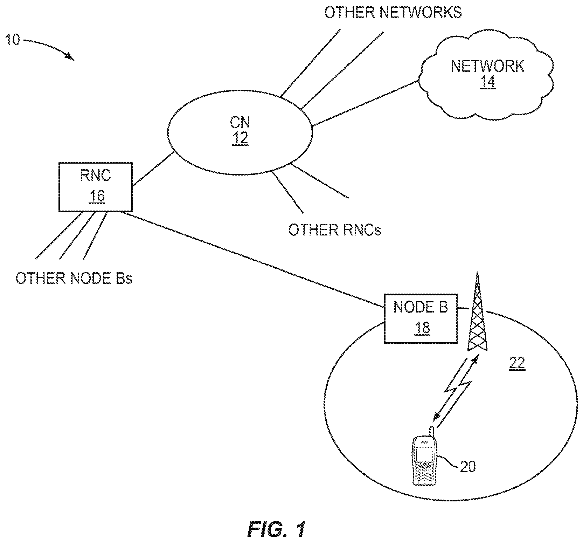

Figure 1 depicts a wireless communication network 10. The network 10 includes a Core Network (CN) 12, communicatively connected to one or more other networks 14, such as the Public Switched Telephone Network (PSTN), the Internet, or the like. Communicatively connected to the CN 12 are one or more Radio Network Controllers (RNC) 16, which in turn control one or more Node B stations 18. The Node B 18, also known as a base station, includes radio frequency (RF) equipment and antennas necessary to effect wireless radio communications with one or more user equipment (UE) 20 within a geographic region, or cell 22. As depicted, the Node B 18 transmits data and control signals to the UE 20 on one or more downlink channels, and the UE similarly transmits data and control signals to the Node B 18 on the uplink.

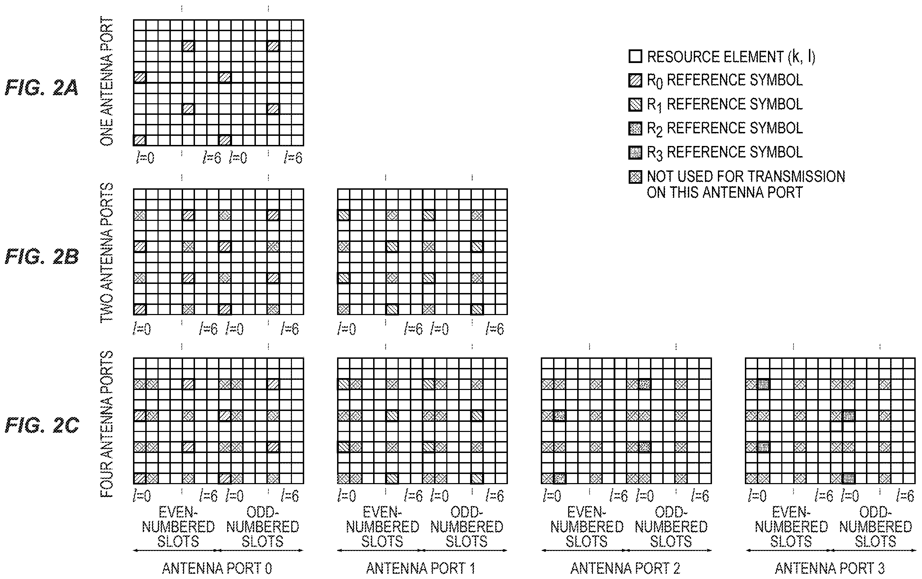

Interspersed within the data on the downlink transmission, the network 10 transmits reference symbols, also known in the art as pilot symbols, to assist the UEs 20 performing channel estimation on the downlink channel responses. Figure 2A depicts example of the reference symbol resources for the LTE network 10 of Figure 1, when the Node B 18 transmits on a single antenna port. The depicted grid plots sub-carriers on the ordinate axis (frequency increasing downwardly) and time (increasing to the right) on the abscissa axis. Note that the time periods are organized into frames, with even-numbered and odd-numbered slots depicted. Each grid element is an OFDM time-frequency resource element, which may carry a data symbol, reference symbol, or neither. Figures 2B and 2C depict reference symbol transmissions when the Node B 18 transmits on two and four antenna ports, respectively.

The reference symbols enable the UE to employ a wide range of standard techniques to estimate the frequency responses of all sub-carriers. Since the values of the reference symbols are known to the UE 20, the estimation quality is generally highest on the sub-carriers occupied by the reference symbols.

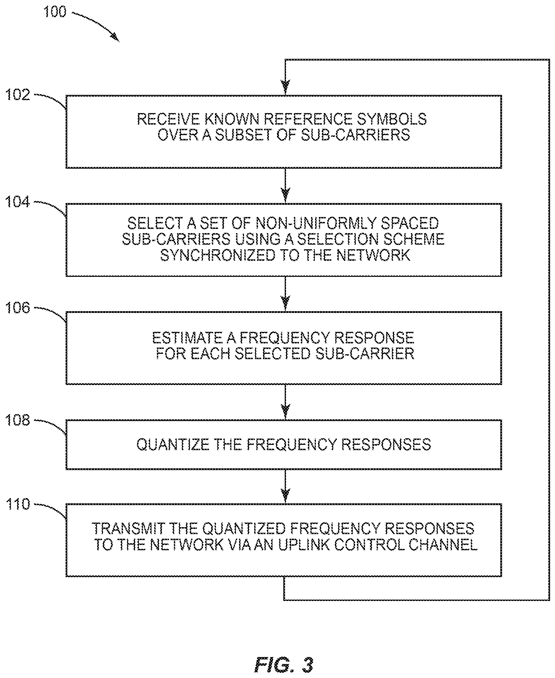

Figure 3 depicts a method of reporting CSI by a UE 20 to the network 10, according to one embodiment. The UE 20 receives known reference symbols over some of the sub-carriers transmitted to it, as depicted in Figure 2 (block 102). The UE 20 selects a set of non-uniformly spaced sub-carriers, on which to perform channel estimation for CSI feedback (block 104). In one embodiment, selection of sub-carriers is limited to those on which reference symbols are transmitted, because the channel estimation quality is generally highest at these sub-carriers. However, in other embodiments, the UE 20 additionally selects one or more sub-carriers that do not include reference symbols. As discussed further herein, the selection of non-uniformly spaced sub-carriers is performed according to a scheme that is synchronized in some manner with the network. The UE 20 estimates the frequency response of the channel (block 106). The frequency response samples associated with the selected sub-carriers are then quantized or encoded by a suitable source encoder into digital bits (block 108). The digital bits are then transmitted via a suitable control channel from the UE 20 to the network 10 (block 110). The control channel provides suitable error detection and correction coding as well as radio resources (transmission power and frequency resource allocation) to ensure proper reception quality at the network 10. The method then repeats.

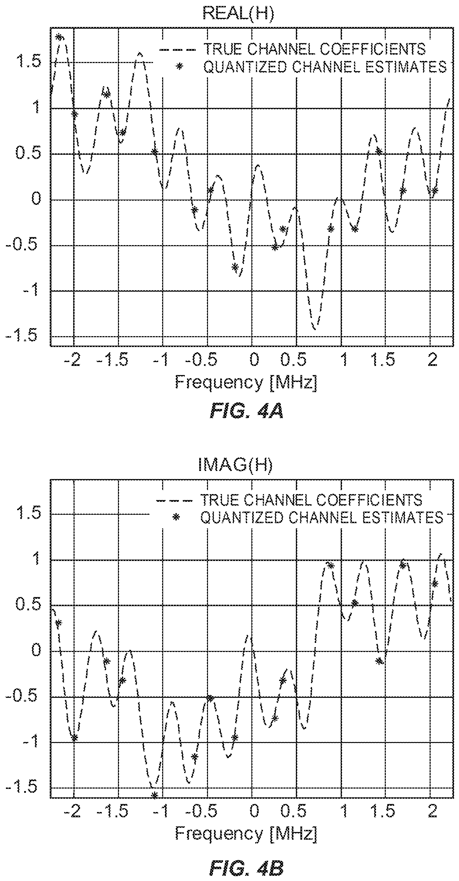

Figures 4A and 4B depict the representative channel frequency response for in-phase (Fig. 4A) and quadrature (Fig. 4B) components of a received signal. Out of 50 reference symbol sub-carriers tones over a 5 MHz band, a subset of 15 non-uniformly spaced reference symbol sub-carriers is selected. These samples are depicted as stars in Figures 4A and 4B. The samples do not always lie on the frequency response curves due primarily to two sources of noise. First, it is assumed the mean square error (MSE) of the UE channel estimator at the reference symbol sub-carriers is -20 dB. Secondly, the I and Q parts of the selected channel estimates are digitized independently by a simple 4-bit uniform quantizer. The resulting average quantization noise is about ~22 dB. With this setup, a total of 15 * 4 * 2 = 120 bits are fed back by the UE 20.

With uniform sampling, the Nyquist theorem dictates that samples (sub-carriers) must be selected at twice the highest frequency of the channel frequency response curve, to fully characterize the curve. Using non-uniform samples, however, far fewer than the Nyquist criterion of sub-carriers may be selected, with a high probability of accurate reconstruction of the channel frequency response curve by the network 10. Accordingly, by selecting non-uniformly spaced sub-carriers, the UE 20 may fully characterize the channel and provide direct CSI feedback, without imposing excessive overhead on the uplink channel.

Upon receipt by the network 10, the received CSI feedback bits are demodulated and inverse quantized. The complete frequency domain channel coefficients may be estimated by setting a time-domain tap-delay channel model based on the received sub-carrier samples. Applying, e.g., a Fast Fourier Transform (FFT) to the estimated delay coefficients yields a frequency-domain response very close to that depicted in Figures 4A and 4B. Detail of the network-side processing of CSI feedback based on channel estimates of non-uniformly spaced sub-carriers is disclosed in copending U.S. Patent Application Serial No. 12/555,973, assigned to the assignee of the present application and filed concurrently herewith. The network-side processing assumes the network 10 is aware of which non-uniformly selected sub-carriers were analyzed by the UE 20. Thus, the UE 20 must select the non-uniformly spaced sub-carriers according to a scheme, protocol, or formula that is synchronized with the network 10. There are numerous ways to accomplish this.

In one embodiment, the set of non-uniformly spaced sub-carriers is changed for each batch, or iteration, of CSI feedback reporting, in a manner coordinated with the network 10.

In one embodiment, the set of non-uniformly spaced sub-carriers is selected based on pseudo-randomized indices with synchronized reading offset. For example, the pseudo-randomized indices may be obtained by taking sequentially the indices produced by a pseudo-random number generator. The pseudo-random number generator may be computed based on an algebraic modification of the input reading indices. For example, the algebraic modification may be based quadratic permutation polynomials (QPP), as described in the 3GPP Technical Specifications 36.212, "Multiplexing and channel coding," incorporated herein by reference. As another example, the algebraic modification may be based on a finite-field computation.

As another example of pseudo-randomized indices with synchronized reading offset, the pseudo-randomized indices may be obtained by taking sequentially the indices produced by an interleaver. The interleaver may be computed based on a column-interleaved rectangular array, as described in section 5.1.4.2.1 of the 3GPP Technical Specifications 36.212.

As yet another example, the sequential reading of indices may be synchronized between UE 20 and the network 10 via an agreed index reading offset. The agreed index reading offset may be obtained in many ways. It may be transmitted explicitly in the same transport channel with the digital bits from the UE 20 to the network 10. Alternatively, the agreed index reading offset may be implicitly computed based on a UE 20 identification number, a sub-frame number, a CSI feedback batch or iteration count, an antenna identification number, a network-side identification number, or the uplink control channel recourse index (e.g., where it is the index of the first resource block for the uplink control channel). The agreed index reading offset may be implicitly computed based on the downlink control channel resource index (e.g., where it is the index of the first resource block for the downlink control channel). Alternatively, the agreed index reading offset may be transmitted from the network 10 to the UE 20 prior to the UE 20 performing channel estimation, or may be pre-agreed between the network 10 and the UE 20. In either case, the index reading offsets may be stored in the UE 20 as a look-up table.

In one example, the set of non-uniformly spaced sub-carriers is selected by initially selecting uniformly spaced sub-carriers, and then applying pseudo-randomized dithering, with a key synchronized to the network 10, to the uniformly spaced sub-carriers to generate the set of non-uniformly spaced sub-carriers. In one embodiment, the maximum span of the pseudo-randomized dithering is selected to be smaller than the uniform spacing in the uniformly spaced indices. The generation of pseudo-randomized dithering may be computed based on algebraic modification of an input key. As described above with respect to the non-uniform sub-carrier selection, the pseudo-randomized dithering may be obtained by taking sequentially the indices produced by an interleaver or a pseudo-random number generator, with the generation of indices computed by the UE 20 based on any of the factors above, or communicated between the network 10 and UE 20, as also described above.

A more general formulation of the selection of sub-carriers, channel estimation, and quantization and reporting of CSI feedback is now presented. The frequency response of a channel at frequency $f$ and time $t$ can be expressed in terms of the time domain channel taps $h(l;t)$ having delays $\tau_i$ as follows:

$$H(f;t) = \sum_{l=0}^{L-1} h(l;t)e^{-j2\pi f\tau_l}$$

At each reporting iteration or time $t$, the following steps are performed by the UE 20:

First, the UE 20 forms an estimate of the downlink channel at a number of sub-carriers. As described above, known reference signals are transmitted from each network antenna (see Fig. 2A-2C), and the UE 20 can use these reference signals to form an estimate of the channel at a number of sub-carriers using standard techniques. These estimates are denoted by the following Nx1 vector:

$$g(t) = [\hat{H}(f_1;t) \quad \hat{H}(f_{2;};t) \quad \cdots \quad \hat{H}(f_N;t)]^T$$

Where $H(f;t)$ is the UE-estimated frequency response of the channel at frequency $f$ and time $t$.

Second, for each reporting instant, the UE 20 forms a number of linear combinations of elements of $g(t)$, i.e., the UE 20 multiplies the vector $g(t)$ by a mixing matrix $P(t)$, of size MxN, to get a new vector $r(t)$ of size Mx1, according to:

$$r(t) = P(t) \times g(t).$$

In embodiments where the elements of $P(t)$ comprise only the values zero or one, $P(t)$ "selects" elements from the vector of channel estimates of non-uniform sub-carriers $g(t)$ according to each row of $P(t)$. In some embodiments, the results of computations or communications described above to select the reading offsets of pseudo-randomized indices may be stored in the mixing matrix $P(t)$. In more general embodiments, however, the elements of $P(t)$ are not restricted to the values zero or one. For example, the elements may comprise fractional values between zero and one, in which case they act as weighting factors as well as selectors. Additionally, the elements may comprise complex values.

The mixing matrix $P(t)$ may be changed for different sets of iterations of CSI feedback. In one embodiment, the selection of $P(t)$ may be by a round-robin selection from among a collection of mixing matrices. In one embodiment, the changing of $P(t)$ may comprise selecting different row compositions. For example, the selection of different row compositions may be based on the round-robin use of a plurality of rows. As another example, it may be based on a pseudo-randomized selection from a plurality of rows. The pseudo-randomized selection of rows may be obtained by taking sequentially the indices produced by an interleaver or pseudo-random number generator, where the indices may be communicated or computed in any manner described above.

In one embodiment, the mixing matrix $P(t)$ comprises rows having at most one non-zero element. In another embodiment, the mixing matrix $P(t)$ comprises rows given by an orthonormal matrix, such as a Hadamard matrix. In yet another embodiment, the mixing matrix $P(t)$ comprises rows given by a unitary matrix. In still another embodiment, the mixing matrix $P(t)$ may be generated by first generating pseudo-random matrices $\{\mathbf{A}_i\}$ with independent Gaussian-distributed entries, performing a QR decomposition on each $\mathbf{A}_i$, and using each resulting unitary Q matrix as a candidate for $P(t)$.

However the mixing matrix $P(t)$ is derived, after the multiplication with $g(t)$, the elements of the product matrix $r(t)$ are quantized using a quantizer $Q_r(\cdot)$ to obtain a number of bits, denoted as the vector $b(t)$, representing the vector $r(t)$. The bits in $b(t)$ are then transmitted to the network 10 using an uplink control channel. As known in the art, the transmission process may include adding redundancy such as CRC, FEC, and the like, to ensure reliable transmission to the network 10.

In the embodiments described above, the UE 20 determines the parameters for selecting non-sequential sub-carriers and/or the dithering parameters to generate a non-sequential selection of sub-carriers, such as the selection of indices for a pseudo-random number generator, autonomously or quasi-autonomously from the network 10 (although, of course, whatever selection mechanism is employed must be synchronized with the network 10). In some embodiments, however, the network 10 directly controls these and other parameters via transmissions to the UE 20 in the downlink.

In one embodiment, the network 10 determines the set of sub-carriers $(f_1, .., f_N)$, for which the UE 20 should estimate channel response and place in vector $g(t)$. In one embodiment, the network 10 determines the mixing matrix $P(t)$ that the UE 20 should use at each reporting instance. In one embodiment, the network 10 determines the quantizer $Q_r(\cdot)$ that the UE 20 uses at each reporting instance, which determines, for example, how many bits are used to quantize each element of $r(t)$. In one embodiment, the network 10 determines how often the CSI feedback reports should be transmitted by the UE 20 on the uplink. In all these embodiments, the network 10 communicates the relevant determinations to the UE 20 in downlink communications. Additionally, of course, the network 10 schedules the time-frequency uplink resources on which the CSI feedback reports shall be transmitted by the UE 20, just as for any uplink communications.

In a typical network 10, each UE 20 might have to report CSI feedback on multiple downlink channels, from multiple different Node Bs 18. Since the path loss between each UE 20 and Node B 18 is different, the downlink channels to be estimated and reported by each UE 20 will have different average power. With a fixed bitrate budget for CSI feedback allocated to each UE 20, a problem arises as how this total fixed bitrate should be divided among the different downlink channels seen by the UE 20.

If a channel between a given UE 20 and a given Node B 18 is extremely weak, the signals transmitted from the Node B 18 will have very little impact at the receiver of the UE 20. Hence, there is little need for the UE 20 to report CSI feedback corresponding to the channels that are very weakly received at the UE 20. Accordingly, in one embodiment, the UE 20 allocates a larger portion of its allocated CSI feedback bitrate to the downlink channels that are relatively strong, than to the channels that are relatively week. Given a set of average channel signal strengths $g(1), g(2),..., g(B)$, and a total CSI feedback allocation of K bits, the network 10 can allocate its total bitrate budget among the various channels. In one embodiment, the network 10 performs the allocation according to a Generalized Breiman, Friedman, Olshen, and Stone (BFOS) Algorithm, as described by E. A. Riskin in the paper, "Optimal Bit Allocation via Generalized BFOS Algorithm," published in the IEEE Trans. Info. Theory, 1991.

In one embodiment, the reporting of CSI feedback may be spread out over a plurality of iterations of CSI feedback. That is, a set of non-uniformly spaced subcarriers are selected, and a frequency response is calculated for each subcarrier. The frequency responses are quantized. However, rather than transmit all of the quantized frequency response data to the network at once, the reporting is spread over two or more iterations of CSI feedback. For example, at time $N$, some number, e.g. ten, subcarriers are selected, and their frequency responses calculated and quantized (possibly jointly). The quantized bits may then be transmitted to the network over the next ten time intervals, $e.g.$, at times $N+1$, $N+2, ..., N+10$. Of course, reports for two subcarriers could be transmitted at a time, using five CSI reporting intervals, or any other permutation. This reporting method minimizes the uplink bandwidth required for reporting CSI captured at one time.

In another embodiment, a persistent form of CSI reporting comprises selecting one or more subcarrier and calculating its frequency response. The quantized frequency response is then transmitted to the network. Over time, the selection of subcarriers is non-uniform. For example, a first subcarrier is selected at time $N$, and its quantized frequency response is transmitted to the network at reporting interval $N+1$. At that time, a new subcarrier (at a different frequency) is selected, and its quantized frequency response is transmitted to the network at the reporting interval $N+2$. Similarly, two or more subcarriers may be selected during any given CSI generation and reporting interval. This reporting method minimizes the uplink bandwidth by spreading both the subcarrier selection, and the reporting of quantized CSI data, over time.

In 5G systems, which will likely be deployed in high frequency bands, the signal wavelength is much smaller than existing systems, which means the antennas can be packed closely together, and each device (e.g., UE) can have a massive number of antennas (for example, several tens or even hundreds) depending on the capability and size of the UE. The number of antennas may typically range, for example, from a 4x4 array (i.e., 16 antennas) to a 16x16 array (i.e., 256 antennas). In this case, feeding back a quantized received signal (or frequency responses of such signal) for every antenna or for most of the antennas will create a large amount of overhead. So it would be advantageous to extend the method of the present disclosure to the spatial domain, where a relatively small subset of antenna elements (for example, 5 to 30 percent of the total) is selected to receive the signal and ultimately produce a quantized frequency response for feedback to the transmitter. The selections of frequency subcarriers in the frequency domain and the selections of antenna subsets in the spatial domain may be performed together or independently of each other.

In this embodiment, the UE 20 transmits succinct, direct channel state information to the network, enabling coordinated multipoint calculations such as joint processing, without substantially increasing uplink overhead. The UE, which has a multiplicity of antennas, receives and processes reference symbols over a small selected subset of antennas. The frequency response for each selected subset of antennas may be estimated conventionally, and the results are quantized and may be transmitted to the network on an uplink control channel.

The number of antennas in the small selected subset depends on the scattering environment in which the UE is located, and the closeness of the antenna spacing. As noted above, a range between 5 to 30 percent of the total number of antennas should account for most scattering environments and antenna designs.

The antennas are selected for the subset pseudo-randomly (according to a predetermined pseudo-random sequence) Pseudo-random selection allows fewer antennas to be selected for the same performance, but requires a more computationally intensive algorithm for reconstruction of the channel estimate at the network. Nevertheless, pseudo-random selection may be preferred since it implies a non-uniform spacing in the selected antenna subset, which provides better results than uniform spacing. Note that similar to the pseudo-random selection process in the frequency domain described above, the predetermined pseudo-random sequence used for antenna selection must be known to the network, *a priori,* and can be provisioned there in any of a number of known ways.

It should be noted that it is not necessary to sample all of the antennas. The number of subsets depends on the pseudo-random sequence used for sampling. When both the network and the UE know the pseudo-random sequence and the corresponding "seed" of the sequence is used, both the network and the UE can increment the "seed" once an antenna (or frequency subcarrier) is randomly selected.

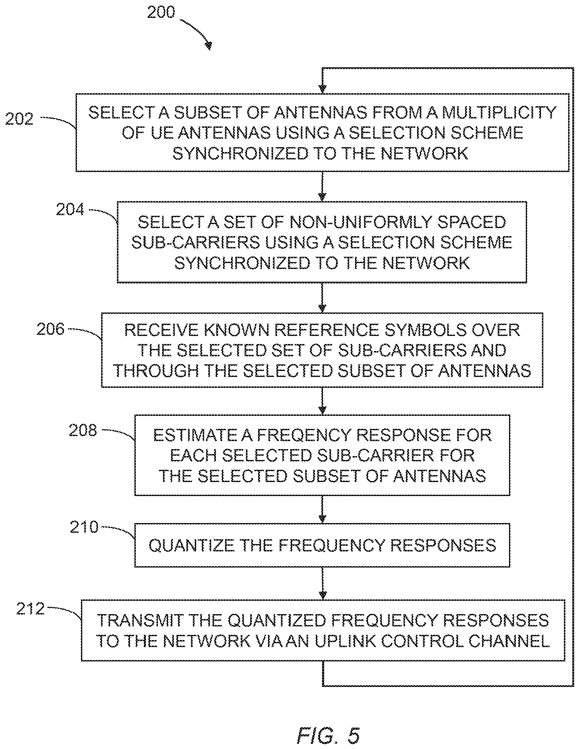

Figure 5 is a flow diagram of a second exemplary embodiment of a method 200 of reporting CSI feedback by the UE 20. The UE 20 selects a subset of antennas from the multiplicity of UE antennas using a selection scheme synchronized to the network (block 202). The UE selects a set of non-uniformly spaced sub-carriers, on which to perform channel estimation for CSI feedback using a selection scheme synchronized to the network (block 204). In one embodiment, selection of sub-carriers is limited to those on which reference symbols are transmitted, because the channel estimation quality is generally highest at these sub-carriers. However, in other embodiments, the UE additionally selects one or more sub-carriers that do not include reference symbols. As discussed further herein, the selection of non-uniformly spaced sub-carriers is performed according to a scheme that is synchronized in some manner with the network.

The UE receives known reference symbols over the selected set of sub-carriers transmitted to it, as described above, and through the selected subset of antennas (block 206). The UE estimates the frequency response for each selected sub-carrier for the selected subset of antennas (block 208). The frequency response samples associated with the selected sub-carriers and antennas are then quantized or encoded by a suitable source encoder into digital bits (block 210). The digital bits are then transmitted via a suitable control channel from the UE to the network 10 (block 212). The control channel provides suitable error detection and correction coding as well as radio resources (transmission power and frequency resource allocation) to ensure proper reception quality at the network 10. The method then repeats for additional sets of sub-carriers and additional subsets of antennas.

The antenna selection at block 202 may dictate which signals (each from one antenna) are sampled and processed by the receiver in block 202. In one embodiment, selected antennas may be connected to a limited number of receiving chains. So depending on the subset of antennas being selected, block 202 processes the signals only from those antennas. In an alternative embodiment, signals from all of the antennas are processed into digital signals first, and the antenna selection then dictates which signals are discarded and which ones are retained and processed for feedback to the network.

By the same reasoning, the selection of the set of non-uniformly spaced sub-carriers at block 204 may be done prior to the receiver processing at block 206 (after, or in parallel with block 202), since it is useful to know which set of sub-carriers are selected before receiving from those sub-carriers. In other words, both spatial and frequency domain selection may be done first, and then the UE processes only those signals (or reference symbols) from the selected antennas and sub-carriers. In another alternative embodiment, the UE receives over a larger set of sub-carriers first and then discards all but those selected to be processed by block 208 and forward.

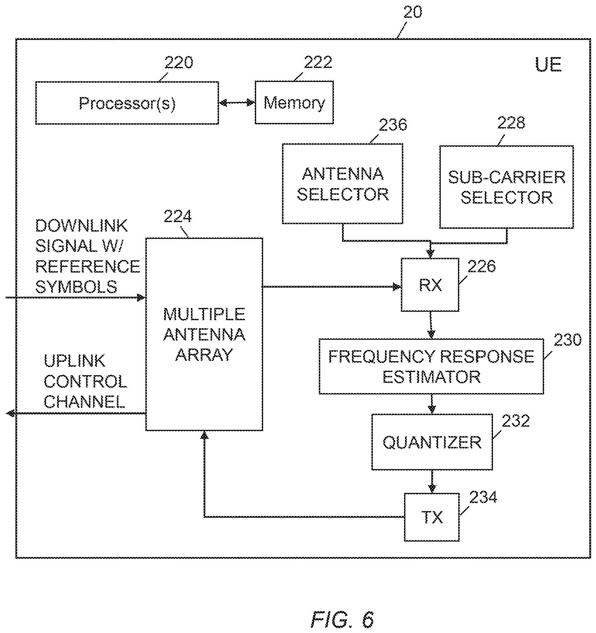

Figure 6 is a simplified block diagram of an exemplary embodiment of a UE 20 modified in accordance with the present disclosure. Operation of the UE may be controlled, for example, by one or more processor(s) 220 coupled to a memory 222 that stores computer program instructions. The processor controls the components of the UE when the processor executes the computer program instructions. In different embodiments, the UE may perform (1) frequency domain selection of a set of sub-carriers for further processing; (2) spatial domain selection of a subset of antennas for further processing, or (3) both frequency domain and spatial domain selections.

A multiple antenna array 224 receives a downlink signal with reference symbols. For illustrative purposes, an example array may include 100 antennas arranged in a 10x10 planar array. The received symbols are passed to a receiver (RX) 226. In an embodiment of the UE operating in only the frequency domain, a sub-carrier selector 228 selects a set of non-uniformly spaced sub-carriers using a selection scheme synchronized to the network, and provides this information to the receiver. A frequency response estimator 230 estimates a frequency response for each selected sub-carrier, and a quantizer 232 quantizes the estimated frequency response. A transmitter (TX) 234 then transmits the quantized frequency responses to the network via an uplink control channel.

In an embodiment of the UE operating in both the frequency domain and the spatial domain, the sub-carrier selector 228 informs the receiver of the set of non-uniformly spaced sub-carriers, and an antenna selector 236 selects a subset of antennas from the array 224 using a selection scheme synchronized to the network, and informs the receiver 226. In the example embodiment having a 10x10 antenna array, the antenna selector may be a pseudo-random selector that, at each time instance, utilizes a predefined pseudo-random sequence to sample each of the two dimensions of the array with, for example, 30% probability of selection. So three out of ten antennas in one of the dimensions are selected, and then for each of these three selected antennas, three out of ten antennas in the other dimension are selected. Thus, a total of nine antennas out of the 100 total antennas are selected as the subset. Both the UE and the network know which antennas are selected since they both know the pseudo-random sequence used for the random selection and the corresponding "seed' being used at the time instance.

The frequency response estimator 230 estimates a frequency response for each selected sub-carrier for the selected subset of antennas. The quantizer 232 quantizes the estimated frequency responses, and the transmitter 234 then transmits the quantized frequency responses from each of these nine selected antennas to the network via the uplink control channel.

In an embodiment of the UE operating in only the spatial domain, the antenna selector 236 selects a subset of antennas from the array 224 using a selection scheme synchronized to the network and informs the receiver 226, which samples and processes only signals from the selected antennas. The frequency response estimator 230 estimates a frequency response for each of the selected antennas. The quantizer 232 quantizes the estimated frequency responses, and the transmitter 234 then transmits the quantized frequency responses for each of the selected antennas to the network via the uplink control channel.

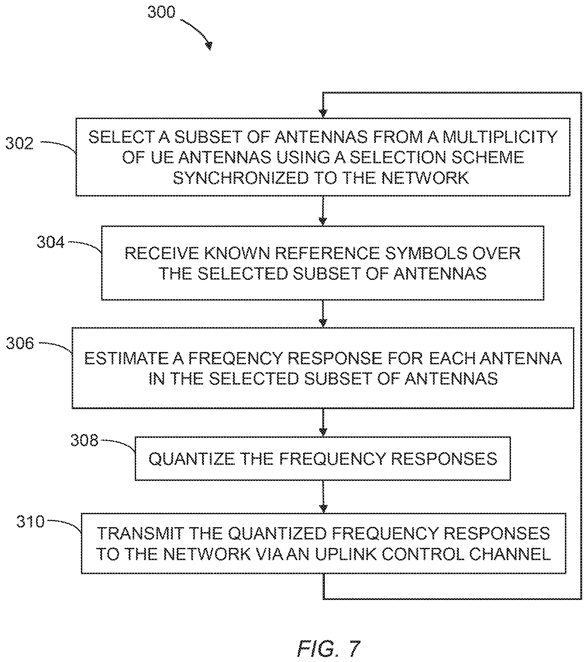

Figure 7 is a flow diagram of a third exemplary embodiment of a method 300 of reporting CSI feedback by the UE 20. The UE 20 selects a subset of antennas from the multiplicity of UE antennas using a selection scheme synchronized to the network (block 302). The UE receives known reference symbols over the selected subset of antennas (block 304). The UE estimates the frequency response for each antenna in the selected subset of antennas (block 306). The frequency response estimates are then quantized or encoded by a suitable source encoder into digital bits (block 308). The digital bits are then transmitted via a suitable control channel from the UE to the network 10 (block 310). The control channel provides suitable error detection and correction coding as well as radio resources (transmission power and frequency resource allocation) to ensure proper reception quality at the network 10. The method then repeats for additional subsets of antennas.

Embodiments described herein significantly reduce CSI feedback bandwidth, while enabling highly accurate CSI availability to the network. This efficiently allows for the implementation of advanced network protocols such as joint processing in coordinated multipoint transmission, without consuming excess uplink transmission resources.

The present invention may, of course, be carried out in other ways than those specifically set forth herein without departing from essential characteristics of the invention. The present embodiments are to be considered in all respects as illustrative and not restrictive.

**Claims**

1. A method of reporting Channel State Information, CSI, by a User Equipment, UE, (20) operative in a wireless communication network (10) in which downlink data is modulated onto a plurality of sub-carriers, each having a different frequency, wherein the UE includes a multiplicity of antennas (224), and the method comprises, at each iteration:

    selecting (202) a subset of non-uniformly spaced antennas from the multiplicity of antennas using a selection scheme synchronized to the network, including utilizing a pseudo-random sequence by an antenna selector to select the subset of non-uniformly spaced antennas;
    selecting (204) a set of non-uniformly spaced sub-carriers from the plurality of sub-carriers using a selection scheme synchronized to the network;
    receiving (206) a plurality of known reference symbols over the selected set of sub-carriers and through the selected subset of antennas;

estimating (208) a frequency response for each selected sub-carrier over only the selected subset of antennas;

quantizing (210) the estimated frequency responses; and

transmitting (212) the quantized frequency responses to the network via an uplink control channel.

2. The method according to claim 1, wherein the multiplicity of antennas (224) are closely spaced.

3. The method according to claim 1, wherein the pseudo-random sequence is a predefined sequence known to both the UE (20) and the network (10).

4. The method according to claim 3, wherein the antenna selector (236) pseudo-randomly selects a plurality of subsets of antennas, each at a different time instance.

5. The method according to claim 4, further comprising determining by the network (10), which antennas are selected by the UE (20) in each subset of antennas based on the known pseudo-random sequence and a sequence seed corresponding to the time instance when each subset is selected.

6. A User Equipment, UE, (20) configured to report Channel State Information, CSI, in a wireless communication network (10) in which downlink data is modulated onto a plurality of sub-carriers, each having a different frequency, the UE comprising:

a multiplicity of antennas (224);

an antenna selector (236) operative to select a subset of the multiplicity of antennas using a selection scheme synchronized to the network, wherein the antenna selector is operative to select a subset of non-uniformly spaced antennas utilizing a pseudo-random sequence;

a sub-carrier selector (228) operative to select a set of sub-carriers using a selection scheme synchronized to the network (10);

a frequency response estimator (230) operative to estimate a frequency response for selected sub-carriers;

a quantizer (232) operative to quantize the estimated frequency responses; and

a transmitter (234) operative to transmit selected quantized frequency responses to the network via an uplink control channel;

wherein the frequency response estimator (230) is operative to estimate the frequency response for each selected sub-carrier over only the selected subset of antennas; and

wherein the UE iteratively performs a CSI process, the antenna selector (236) is operative to select a subset of antennas at each iteration of the CSI process, and the sub-carrier selector (228) is operative to select a set of sub-carriers at each iteration of the CSI process.

7. The UE (20) according to claim 6, wherein the multiplicity of antennas are closely spaced.

8. The UE (20) according to claim 6, wherein the pseudo-random sequence is a predefined sequence known to both the UE (20) and the network (10).

9. The UE (20) according to claim 8, wherein the antenna selector (236) is operative to pseudo-randomly select a plurality of subsets of antennas, each at a different time instance.

10. The UE (20) according to claim 9, wherein the antenna selector (236) is operative to select each subset of antennas based on the known pseudo-random sequence and a sequence seed corresponding to the time instance when each subset is selected, wherein the sequence seed is also known to the network (10), thereby enabling the network to determine which antennas are selected by the UE (20) in each subset.

## Patentansprüche

1. Verfahren zur Meldung von Kanalzustandsinformationen, CSI, durch eine Benutzereinrichtung, UE, (20), die in einem drahtlosen Kommunikationsnetzwerk (10) tätig ist, wobei Downlink-Daten auf eine Mehrzahl von Unterträgern moduliert werden, die jeweils eine verschiedene Frequenz aufweisen, wobei die UE eine Vielzahl von Antennen (224) umfasst, und das Verfahren bei jeder Iteration umfasst:

Auswählen (202) eines Teilsatzes von ungleichmäßig beabstandeten Antennen aus der Vielzahl von Antennen unter Verwendung eines mit dem Netzwerk synchronisierten Auswahlschemas, das ein Verwenden einer pseudozufälligen Sequenz durch einen Antennenwähler umfasst, um den Teilsatz von ungleichmäßig beabstandeten Antennen auszuwählen;

Auswählen (204) eines Satzes von ungleichmäßig beabstandeten Unterträgern aus der Mehrzahl von Unterträgern unter Verwendung eines mit dem Netzwerk synchronisierten Auswahlschemas;

Empfangen (206) einer Mehrzahl von bekannten Referenzsymbolen über den ausgewählten Satz von Unterträgern und durch den ausgewählten Teilsatz von Antennen;

Schätzen (208) einer Frequenzantwort für jeden ausgewählten Unterträger nur über den ausgewählten Teilsatz von Antennen;
Quantisieren (210) der geschätzten Frequenzantworten; und
Senden (212) der quantisierten Frequenzantworten über einen Uplink-Steuerkanal an das Netzwerk.

**2.** Verfahren nach Anspruch 1, wobei die Vielzahl von Antennen (224) dicht beieinander angeordnet ist.

**3.** Verfahren nach Anspruch 1, wobei die pseudozufällige Sequenz eine vordefinierte Sequenz ist, die sowohl der UE (20) als auch dem Netzwerk (10) bekannt ist.

**4.** Verfahren nach Anspruch 3, wobei der Antennenwähler (236) eine Mehrzahl von Teilsätzen von Antennen jeweils zu einem verschiedenen Zeitpunkt pseudozufällig auswählt.

**5.** Verfahren nach Anspruch 4, ferner umfassend ein Bestimmen durch das Netzwerk (10), welche Antennen durch die UE (20) in jedem Teilsatz von Antennen ausgewählt werden, basierend auf der bekannten pseudozufälligen Sequenz und einem Sequenzstartwert, der dem Zeitpunkt entspricht, zu welchem jeder Teilsatz ausgewählt wird.

**6.** Benutzereinrichtung, UE, (20), die zum Melden von Kanalzustandsinformationen, CSI, in einem drahtlosen Kommunikationsnetzwerk (10) konfiguriert ist, wobei Downlink-Daten auf eine Mehrzahl von Unterträgern moduliert werden, die jeweils eine verschiedene Frequenz aufweisen, wobei die UE umfasst:

eine Vielzahl von Antennen (224);
einen Antennenwähler (236), der zum Auswählen eines Teilsatzes der Vielzahl von Antennen unter Verwendung eines mit dem Netzwerk synchronisierten Auswahlschemas ausgelegt ist, wobei der Antennenwähler zum Auswählen eines Teilsatzes von ungleichmäßig beabstandeten Antennen unter Verwendung einer pseudozufälligen Sequenz ausgelegt ist;
einen Unterträgerwähler (228), der zum Auswählen eines Satzes von Unterträgern unter Verwendung eines mit dem Netzwerk (10) synchronisierten Auswahlschemas ausgelegt ist;
einen Frequenzantwortschätzer (230), der zum Schätzen einer Frequenzantwort für ausgewählte Unterträger ausgelegt ist;
einen Quantisierer (232), der zum Quantisieren der geschätzten Frequenzantworten ausgelegt ist; und
einen Sender (234), der zum Senden der ausgewählten quantisierten Frequenzantworten über einen Uplink-Steuerkanal an das Netzwerk ausgelegt ist;

wobei der Frequenzantwortschätzer (230) so ausgelegt ist, dass er die Frequenzantwort für jeden ausgewählten Unterträger nur über den ausgewählten Teilsatz von Antennen schätzt; und
wobei die UE einen CSI-Prozess iterativ durchführt, der Antennenwähler (236) zum Auswählen eines Teilsatzes von Antennen bei jeder Iteration des CSI-Prozesses ausgelegt ist, und der Unterträgerwähler (228) zum Auswählen eines Satzes von Unterträgern bei jeder Iteration des CSI-Prozesses ausgelegt ist.

**7.** (UE (20) nach Anspruch 6, wobei die Vielzahl von Antennen dicht beieinander angeordnet ist.

**8.** UE (20) nach Anspruch 6, wobei die pseudozufällige Sequenz eine vordefinierte Sequenz ist, die sowohl der UE (20) als auch dem Netzwerk (10) bekannt ist.

**9.** UE (20) nach Anspruch 8, wobei der Antennenwähler (236) so ausgelegt ist, dass er eine Mehrzahl von Teilsätzen von Antennen jeweils zu einem verschiedenen Zeitpunkt pseudozufällig auswählt.

**10.** UE (20) nach Anspruch 9, wobei der Antennenwähler (236) so ausgelegt ist, dass er jeden Teilsatz von Antennen basierend auf der bekannten pseudozufälligen Sequenz und einem Sequenzstartwert auswählt, der dem Zeitpunkt entspricht, zu welchem jeder Teilsatz ausgewählt wird, wobei der Sequenzstartwert auch dem Netzwerk (10) bekannt ist, um dadurch das Netzwerk zum Bestimmen, welche Antennen durch die UE (20) in jedem Teilsatz ausgewählt werden, zu befähigen.

**Revendications**

**1.** Procédé de rapport d'informations d'état de canal, CSI, par un équipement d'utilisateur, UE, (20) opérationnel dans un réseau de communication sans fil (10) dans lequel des données de liaison descendante sont modulées sur une pluralité de sous-porteuses, chacune d'elles ayant une fréquence différente, dans lequel l'UE inclut une multiplicité d'antennes (224), et le procédé comprend, à chaque itération :

la sélection (202) d'un sous-ensemble d'antennes espacées non uniformément parmi la multiplicité d'antennes en utilisant un schéma de sélection synchronisé avec le réseau, incluant l'utilisation d'une séquence pseudo-aléatoire par un sélecteur d'antenne pour sélectionner le sous-ensemble d'antennes espacées non uniformément ;
la sélection (204) d'un ensemble de sous-porteuses espacées non uniformément parmi la pluralité de sous-porteuses en utilisant un schéma de sélection synchronisé avec le réseau ;

la réception (206) d'une pluralité de symboles de référence connus sur l'ensemble sélectionné de sous-porteuses et par l'intermédiaire du sous-ensemble sélectionné d'antennes ;

l'estimation (208) d'une réponse de fréquence pour chaque sous-porteuse sélectionnée sur uniquement le sous-ensemble sélectionné d'antennes ;

la quantification (210) des réponses de fréquence estimées ; et

la transmission (212) des réponses de fréquence quantifiées à destination du réseau par l'intermédiaire d'un canal de commande de liaison montante.

**2.** Procédé selon la revendication 1, dans lequel la multiplicité d'antennes (224) sont rapprochées.

**3.** Procédé selon la revendication 1, dans lequel la séquence pseudo-aléatoire est une séquence prédéfinie connue à la fois par l'UE (20) et par le réseau (10).

**4.** Procédé selon la revendication 3, dans lequel le sélecteur d'antenne (236) sélectionne de manière pseudo-aléatoire une pluralité de sous-ensembles d'antennes, chacun d'eux à une instance de temps différente.

**5.** Procédé selon la revendication 4, comprenant en outre la détermination, par le réseau (10), des antennes qui sont sélectionnées par l'UE (20) dans chaque sous-ensemble d'antennes sur la base de la séquence pseudo-aléatoire connue et d'un germe de séquence correspondant à l'instance de temps à laquelle chaque sous-ensemble est sélectionné.

**6.** Equipement d'utilisateur, UE, (20) configuré pour rapporter des informations d'état de canal, CSI, dans un réseau de communication sans fil (10) dans lequel des données de liaison descendante sont modulées sur une pluralité de sous-porteuses, chacune d'elles ayant une fréquence différente, l'UE comprenant :

une multiplicité d'antennes (224) ;

un sélecteur d'antenne (236) opérationnel pour la sélection d'un sous-ensemble de la multiplicité d'antennes en utilisant un schéma de sélection synchronisé avec le réseau, dans lequel le sélecteur d'antenne est opérationnel pour la sélection d'un sous-ensemble d'antennes espacées non uniformément en utilisant une séquence pseudo-aléatoire ;

un sélecteur de sous-porteuse (228) opérationnel pour la sélection d'un ensemble de sous-porteuses en utilisant un schéma de sélection synchronisé avec le réseau (10) ;

un estimateur de réponse de fréquence (230) opérationnel pour l'estimation d'une réponse de fréquence pour des sous-porteuses sélectionnées ;

un quantificateur (232) opérationnel pour la quantification des réponses de fréquence estimées ; et

un émetteur (234) opérationnel pour la transmission des réponses de fréquence quantifiées sélectionnées à destination du réseau par l'intermédiaire d'un canal de commande de liaison montante ;

dans lequel l'estimateur de réponse de fréquence (230) est opérationnel pour l'estimation de la réponse de fréquence pour chaque sous-porteuse sélectionnée sur uniquement le sous-ensemble sélectionné d'antennes ; et

dans lequel l'UE effectue itérativement un processus de CSI, le sélecteur d'antenne (236) est opérationnel pour la sélection d'un sous-ensemble d'antennes à chaque itération du processus de CSI, et le sélecteur de sous-porteuse (228) est opérationnel pour la sélection d'un ensemble de sous-porteuses à chaque itération du processus de CSI.

**7.** UE (20) selon la revendication 6, dans lequel la multiplicité d'antennes sont rapprochées.

**8.** UE (20) selon la revendication 6, dans lequel la séquence pseudo-aléatoire est une séquence prédéfinie connue à la fois par l'UE (20) et par le réseau (10).

**9.** UE (20) selon la revendication 8, dans lequel le sélecteur d'antenne (236) est opérationnel pour la sélection de manière pseudo-aléatoire d'une pluralité de sous-ensembles d'antennes, chacun d'eux à une instance de temps différente.

**10.** UE (20) selon la revendication 9, dans lequel le sélecteur d'antenne (236) est opérationnel pour la sélection de chaque sous-ensemble d'antennes sur la base de la séquence pseudo-aléatoire connue et d'un germe de séquence correspondant à l'instance de temps à laquelle chaque sous-ensemble est sélectionné, dans lequel le germe de séquence est également connu par le réseau (10), en permettant de ce fait au réseau de déterminer les antennes qui sont sélectionnées par l'UE (20) dans chaque sous-ensemble.

FIG. 1

*FIG. 2A*

ONE ANTENNA PORT

$l=0$   $l=6$ $l=0$   $l=6$

☐ RESOURCE ELEMENT (k, l)

▨ $R_0$ REFERENCE SYMBOL

▧ $R_1$ REFERENCE SYMBOL

▦ $R_2$ REFERENCE SYMBOL

▩ $R_3$ REFERENCE SYMBOL

▨ NOT USED FOR TRANSMISSION ON THIS ANTENNA PORT

*FIG. 2B*

TWO ANTENNA PORTS

$l=0$   $l=6$ $l=0$   $l=6$     $l=0$   $l=6$ $l=0$   $l=6$

*FIG. 2C*

FOUR ANTENNA PORTS

$l=0$   $l=6$ $l=0$   $l=6$

EVEN-NUMBERED SLOTS    ODD-NUMBERED SLOTS

ANTENNA PORT 0

$l=0$   $l=6$ $l=0$   $l=6$

EVEN-NUMBERED SLOTS    ODD-NUMBERED SLOTS

ANTENNA PORT 1

$l=0$   $l=6$ $l=0$   $l=6$

EVEN-NUMBERED SLOTS    ODD-NUMBERED SLOTS

ANTENNA PORT 2

$l=0$   $l=6$ $l=0$   $l=6$

EVEN-NUMBERED SLOTS    ODD-NUMBERED SLOTS

ANTENNA PORT 3

100

102 — RECEIVE KNOWN REFERENCE SYMBOLS
OVER A SUBSET OF SUB-CARRIERS

104 — SELECT A SET OF NON-UNIFORMLY SPACED
SUB-CARRIERS USING A SELECTION SCHEME
SYNCHRONIZED TO THE NETWORK

106 — ESTIMATE A FREQUENCY RESPONSE
FOR EACH SELECTED SUB-CARRIER

108 — QUANTIZE THE FREQUENCY RESPONSES

110 — TRANSMIT THE QUANTIZED FREQUENCY RESPONSES
TO THE NETWORK VIA AN UPLINK CONTROL CHANNEL

*FIG. 3*

REAL(H)

FIG. 4A

IMAG(H)

FIG. 4B

```
                                    200

        ┌──────────────────────────────────────────────┐
202 ──  │  SELECT A SUBSET OF ANTENNAS FROM A MULTIPLICITY │
        │     OF UE ANTENNAS USING A SELECTION SCHEME      │
        │        SYNCHRONIZED TO THE NETWORK               │
        └──────────────────────────────────────────────┘
                            │
        ┌──────────────────────────────────────────────┐
204 ──  │   SELECT A SET OF NON-UNIFORMLY SPACED          │
        │   SUB-CARRIERS USING A SELECTION SCHEME         │
        │        SYNCHRONIZED TO THE NETWORK              │
        └──────────────────────────────────────────────┘
                            │
        ┌──────────────────────────────────────────────┐
206 ──  │   RECEIVE KNOWN REFERENCE SYMBOLS OVER          │
        │   THE SELECTED SET OF SUB-CARRIERS AND          │
        │  THROUGH THE SELECTED SUBSET OF ANTENNAS        │
        └──────────────────────────────────────────────┘
                            │
        ┌──────────────────────────────────────────────┐
208 ──  │    ESTIMATE A FREQENCY RESPONSE FOR             │
        │      EACH SELECTED SUB-CARRIER FOR              │
        │    THE SELECTED SUBSET OF ANTENNAS              │
        └──────────────────────────────────────────────┘
                            │
        ┌──────────────────────────────────────────────┐
210 ──  │   QUANTIZE THE FREQUENCY RESPONSES              │
        └──────────────────────────────────────────────┘
                            │
        ┌──────────────────────────────────────────────┐
212 ──  │  TRANSMIT THE QUANTIZED FREQUENCY RESPONSES     │
        │  TO THE NETWORK VIA AN UPLINK CONTROL CHANNEL   │
        └──────────────────────────────────────────────┘
```

*FIG. 5*

*FIG. 6*

300

302 — SELECT A SUBSET OF ANTENNAS FROM A MULTIPLICITY OF UE ANTENNAS USING A SELECTION SCHEME SYNCHRONIZED TO THE NETWORK

304 — RECEIVE KNOWN REFERENCE SYMBOLS OVER THE SELECTED SUBSET OF ANTENNAS

306 — ESTIMATE A FREQENCY RESPONSE FOR EACH ANTENNA IN THE SELECTED SUBSET OF ANTENNAS

308 — QUANTIZE THE FREQUENCY RESPONSES

310 — TRANSMIT THE QUANTIZED FREQUENCY RESPONSES TO THE NETWORK VIA AN UPLINK CONTROL CHANNEL

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 43975912
- US 55596609
- US 61172484
- US 2009124290 A1
- US 2011280287 A1
- US 2011077020 A1
- US 2008187061 A1
- US 2013077658 A1
- US 555973

**Non-patent literature cited in the description**

- **E. A. RISKIN.** Optimal Bit Allocation via Generalized BFOS Algorithm. *the IEEE Trans. Info. Theory,* 1991